# EUROPÄISCHE PATENTSCHRIFT

(11) **EP 4 402 027 B1**
(45) Veröffentlichungstag und Bekanntmachung des Hinweises auf die Patenterteilung: **16.07.2025**
(21) Anmeldenummer: 22773206.2
(22) Anmeldetag: 05.09.2022
(51) Int. Cl.: B60T 8/36, B60T 8/50, B60T 17/22, B60T 13/68

(54) **ELEKTRO-MAGNETISCHES DRUCKSTEUERVENTIL MIT INNERER DRUCKLUFTFÜHRUNG**
ELECTRO-MAGNETIC PRESSURE CONTROL VALVE WITH INTERNAL AIR LINE
VANNE DE CONTROLE DE PRESSION ELECTROMAGNETIQUE AVEC CONDUITE D'AIR INTERNE

(30) Priorität: 17.09.2021 DE 102021124136
(43) Veröffentlichungstag der Anmeldung: 24.07.2024
(73) Patentinhaber: KNORR-BREMSE Systeme für Nutzfahrzeuge GmbH, 80809 München (DE)
(72) Erfinder: RÖTHER, Friedbert, 74389 Cleebronn (DE); LINKE, Kai, 71638 Ludwigsburg (DE); HOFFMANN, Christoph, 71126 Gäufelden (DE)
(86) Internationale Anmeldenummer: PCT/EP2022/074576
(87) Internationale Veröffentlichungsnummer: WO 2023/041360

(56) Entgegenhaltungen:
- EP-B1- 0 433 673
- DE-C1- 4 013 425
- JP-A- H07 277 166

## Beschreibung

### Elektro-magnetisches Drucksteuerventil mit innerer Druckluftführung

Die Erfindung betrifft ein elektro-magnetisches Drucksteuerventil zur Steuerung eines Luftdrucks gemäß dem Oberbegriff von Anspruch 1. Weiterhin betrifft die Erfindung auch eine Drucksteuerventileinrichtung für druckluftbetätigte Fahrzeugbremsanlagen gemäß Anspruch 12 sowie eine druckluftbetätigte Fahrzeugbremsanlage gemäß Anspruch 13.

Ein gattungsgemäßes elektro-magnetisches Drucksteuerventil ist aus EP 0 433 673 B1 bekannt. Dort wird eine axiale Druckluftströmung an einem Außenumfang des Ankers entlanggeführt, der in einer Bohrung des Gehäuses geführt ist. Hierzu muss entweder ein gewisses Spiel zwischen der radial äußeren Umfangsfläche des Ankers und der radial inneren Umfangsfläche der Bohrung vorhanden sein, oder der Anker weist an seiner radial äußeren Umfangsfläche axiale Nuten für die Druckluftströmung auf. In beiden Fällen wirkt sich dies nachteilig auf die Gleiteigenschaften und Stabilität der Bewegung des Ankers in der Bohrung und damit auf den Verschleiß aus.

Vor diesem Hintergrund besteht die Aufgabe der Erfindung darin, ein elektro-magnetisches Drucksteuerventil derart weiterzubilden, dass der Verschleiß reduziert wird. Ebenso sollen auch eine Drucksteuerventileinrichtung für druckluftbetätigte Fahrzeugbremsanlagen mit wenigstes einem solchen elektro-magnetischen Drucksteuerventil sowie eine druckluftbetätigte Fahrzeugbremsanlage mit wenigstens einer solchen Drucksteuerventileinrichtung zur Verfügung gestellt werden.

Diese Aufgabe wird durch die Merkmale der Ansprüche 1, 12 und 13 gelöst.

### Offenbarung der Erfindung

Die Erfindung geht aus von einem elektro-magnetischen Drucksteuerventil zur Steuerung eines Luftdrucks, mit
a) einem Gehäuse, das einen Druckluft-Versorgungsanschluß zum Anschluss an eine Druckluftversorgung, einen Druckluft-Ausgangsanschluß zum Anschluss an einen Verbraucher und einen Druckluft-Entlüftungsanschluß zum Anschluss an eine Entlüftung aufweist, und mit
b) einem Anker, welcher an seinen einander abgewandten Stirnseiten je einen Ventilkörper trägt, einen insbesondere zylindrischen ersten Ventilkörper und einen insbesondere zylindrischen zweiten Ventilkörper, und welcher innerhalb des Gehäuses durch Magnetkräfte entgegen einer Federkraft wenigstens einer ersten Feder derart verschiebbar ist, dass er den Druckluft-Ausgangsanschluß wahlweise mit dem Druckluft-Versorgungsanschluß oder dem Druckluft-Entlüftungsanschluß verbindet, und mit
c) einem insbesondere zylindrischen ersten Ventilsitz, welcher mit dem Druckluft-Versorgungsanschluß verbunden ist, und mit
d) einem insbesondere zylindrischen zweiten Ventilsitz, welcher mit dem Druckluft-Entlüftungsanschluß verbunden ist, wobei
e) der erste Ventilkörper zusammen mit einem ersten Ventilsitz ein Einlassventil und der zweite Ventilkörper zusammen mit dem zweiten Ventilsitz ein Auslassventil bildet.

Mit anderen Worten ist das Einlassventil geschlossen, wenn der erste Ventilkörper auf dem ersten Ventilsitz dichtend aufsitzt, und geöffnet, wenn wenn der erste Ventilkörper von dem ersten Ventilsitz abgehoben ist. In analoger Weise ist das Auslassventil geschlossen, wenn der zweite Ventilkörper auf dem zweiten Ventilsitz dichtend aufsitzt, und geöffnet, wenn wenn der zweite Ventilkörper von dem zweiten Ventilsitz abgehoben ist.

Gemäß der Erfindung ist dann Folgendes vorgesehen:
f) Eine permanente axiale Druckluftverbindung durch den ersten Ventilkörper, durch das Innere des Ankers und durch den zweiten Ventilkörper hindurch, welche wenigstens eine insbesondere zylindrische zentrale axiale Durchgangsbohrung des Ankers, wenigstens eine erste axiale Durchgangsöffnung in dem ersten Ventilkörper und wenigstens eine zweite axiale Durchgangsöffnung in dem zweiten Ventilkörper umfasst, wobei
g) der erste Ventilkörper einen insbesondere zylindrischen ersten radial inneren Abschnitt aufweist, welcher den ersten Ventilsitz dichtend verschließt, wenn das Einlassventil geschlossen ist, und einen insbesondere zylindrischen ersten radial äußeren Abschnitt, welcher die wenigstens eine erste axiale Durchgangsöffnung aufweist, und
h) der zweite Ventilkörper einen insbesondere zylindrischen zweiten radial inneren Abschnitt aufweist, welcher den zweiten Ventilsitz dichtend verschließt, wenn das Auslassventil geschlossen ist, und einen insbesondere zylindrischen zweiten radial äußeren Abschnitt, welcher die wenigstens eine zweite axiale Durchgangsöffnung aufweist.

Permanente axiale Druckluftverbindung bedeutet, dass die axiale Druckluftverbindung stets vorhanden ist, unabhängig davon, ob die Druckluftverbindung von Druckluft tatsächlich durchströmt wird oder nicht.

Mittels dieser in Bezug auf den Anker inneren axialen Druckluftverbindung kann eine äußere Druckluftverbindung um den Anker herum mit den oben beschriebenen Nachteilen vermieden werden, wodurch der Verschleiß des elektro-magnetisches Drucksteuerventil reduziert werden kann.

Vorzugsweise ist die wenigstens eine erste axiale Durchgangsöffnung des ersten Ventilkörpers radial außerhalb in Bezug auf den ersten radial inneren Abschnitt des ersten Ventilkörpers angeordnet, welcher insbesondere ausschließlich mit dem ersten Ventilsitz zusammenwirkt. Folglich kann keine Strömungsverbindung durch den ersten Ventilsitz hindurch entstehen, wenn der erste Ventilkörper mit seinem radial inneren Abschnitt auf dem ersten Ventilsitz aufsitzt. Der erste radial äußere Abschnitt des ersten Ventilkörpers kann hingegen den ersten Ventilsitz nicht verschließen, weil er radial außerhalb von diesem angeordnet ist.

In analoger Weise ist die wenigstens eine zweite axiale Durchgangsöffnung des zweiten Ventilkörpers radial außerhalb in Bezug auf den zweiten radial inneren Abschnitt des zweiten Ventilkörpers angeordnet ist, welcher insbesondere ausschließlich mit dem zweiten Ventilsitz zusammenwirkt. Folglich kann keine Strömungsverbindung durch den zweiten Ventilsitz hindurch entstehen, wenn der zweite Ventilkörper mit seinem radial inneren Abschnitt auf dem zweiten Ventilsitz aufsitzt. Der zweite radial äußere Abschnitt des zweiten Ventilkörpers kann hingegen den ersten Ventilsitz nicht verschließen, weil er radial außerhalb von diesem angeordnet ist.

Vorzugsweise führt die permanente axiale Druckluftverbindung insbesondere nur dann Druckluft von dem Druckluft-Versorgungsanschluß in den Druckluft-Ausgangsanschluß, wenn bei geöffnetem Einlasssteuerventil der erste Ventilkörper von dem ersten Ventilsitz abgehoben ist und bei geschlossenem Auslasssteuerventil der zweite Ventilkörper auf dem zweiten Ventilsitz dichtend aufsitzt. Wenn hingegen der erste Ventilkörper auf dem dem ersten Ventilsitz aufsitzt, also bei geschlossenem Einlassventil, dann führt die permanente axiale Druckluftverbindung keine Druckluft.

Auch kann der erste Ventilkörper einen ersten separaten Körper darstellen, der in der axialen Durchgangsbohrung des Ankers aufgenommen ist. Gemäß einer Weiterbildung kann der erste Ventilkörper in der axialen Durchgangsbohrung des Ankers beispielsweise an deren erstem Ende axial verschieblich aufgenommen sein.

Bevorzugt kann der zweite Ventilkörper einen zweiten separaten Körper darstellen und in der axialen Durchgangsbohrung des Ankers insbesondere axial- und drehfest aufgenommen sein. Insbesondere kann der zweite Ventilkörper in der axialen Durchgangsbohrung des Ankers beispielsweise an deren zweitem Ende durch einen Preßssitz und/oder eine Verstemmung aufgenommen sein.

Besonders bevorzugt kann der erste Ventilkörper, der in der axialen Durchgangsbohrung des Ankers axial verschieblich gelagert ist, an dem zweiten Ventilkörper durch wenigstens eine zweite Feder axial abgestützt sein. Dadurch wird zum einen eine gewisse Dämpfungswirkung erzielt, wenn der erste Ventilkörper gegen den ersten Ventilsitz anschlägt, was vor allem dann von Vorteil ist, bei das elektro-magnetische Drucksteuerventil mit relativ hoher Schaltfrequenz wie beispielsweise zum Steuern eines Bremsdrucks im Rahmen einer Bremsschlupfregelung eingesetzt wird. Zum andern verstärkt die auf den ersten Ventilkörper wirkende axiale Federkraft der zweiten Feder die Dichtwirkung, wenn der Anker mit dem ersten Ventilkörper gegen den ersten Ventilsitz beispielsweise durch ein Bestromen der wenigstens einen Magnetspule herrührende Magnetkräfte gedrängt wird. Nicht zuletzt verhindert die den ersten Ventilkörper gegen den ersten Ventilsitz spannende Federkraft der wenigstens einen zweiten Feder, dass der erste Ventilkörper vom ersten Ventilsitz infolge des am ersten Ventilsitz anstehenden Drucks am Druckluft-Versorgungsanschluß abhebt, der bei einer druckmittelbetätigten Bresmankage eines Fahrzeugs beispielsweise durch einen Bremsdruck gebildet wird.

Auch kann der erste Ventilkörper ein erstes flexibles Dichtelement aus wenigstens einem Elastomer ausbilden oder tragen. Insbesondere kann der erste Ventilkörper ausschließlich aus dem ersten Dichtelement bestehen.

Gemäß einer Weiterbildung kann (können) der erste radial äußere Abschnitt des ersten Ventilkörpers und/oder der zweite radial äußere Abschnitt des zweiten Ventilkörpers insbesondere am Umfang verteilt angeordnete radial äußere Schlitze oder radial äußere Nuten aufweisen, die insbesondere in axialer Richtung verlaufen und daher der axialen Druckluftführung dienen.

Die von den Schlitzen oder Nuten abweichende äußere Umfangsfläche des zweiten Ventilkörpers kann dann die radiale innere Umfangsfläche der axialen Durchgangsbohrung des Ankers beispielsweise durch einen Preßsitz kontaktieren.

Bevorzugt kann der zweite Ventilkörper ein zweites flexibles Dichtelement aus wenigstens einem Elastomer ausbilden oder ein solches tragen, welches gegen den zweiten Ventilsitz dichtet, wenn das Auslassventil geschlossen ist. Weiterbildend kann der zweite Ventilkörper als ein druckluftdurchlässiger Käfig ausgebildet sein, in welchem dann das zweite Dichtelement gehalten ist, wobei die zum zweiten Ventilsitz weisende Fläche des Dichtelements, welche mit dem zweiten Ventilsitz zusammenwirkt, von dem Käfig freigelassen ist.

Bei dem elektro-magnetischen Drucksteuerventil kann in dem Gehäuse wenigstens eine elektrische Magnetspule aufgenommen sein, wobei der Anker abhängig von einer elektrischen Erregung oder Entregung der wenigstens einen Magnetspule zwischen einer ersten axialen Position, in welcher der zweite Ventilkörper gegen den zweiten Ventilsitz dichtet und der erste Ventilkörper von dem ersten Ventilssitz abgehoben ist und einer zweiten axialen Position, in welcher der erste Ventilkörper gegen den ersten Ventilsitz dichtet und der zweite Ventilkörper von dem zweiten Ventilssitz abgehoben ist, axial betätigbar ist.

Dabei kann das elektro-magnetische Drucksteuerventil
a) als ein "Normally Open"-Drucksteuerventil ausgebildet sein, bei welchem bei unbestromter Magnetspule das Einlassventil geöffnet und das Auslassventil geschlossen, oder
b) als ein "Normally Closed"-Drucksteuerventil ausgebildet sein, bei welchem bei unbestromter Magnetspule das Einlassventil geschlossen und das Auslassventil geöffnet ist.

Bei dem "Normally Open"-Drucksteuerventil spannt die wenigstens eine erste Feder den Anker in Richtung auf den zweiten Ventilsitz derart vor, dass der am Anker an der einen Stirnseite angeordnete zweite Ventilkörper gegen den zweiten Ventilsitz dichtend gespannt wird und der am Anker an der anderen Stirnseite angeordnete erste Ventilkörper vom ersten Ventilsitz abgehoben ist, wobei dann die wenigstens eine Magnetspule unbestromt ist und demzufolge keine Magnetkräfte auf den Anker wirken. Bei einer Bestromung der wenigstens einen Magnetspule wird dann der Anker gegen die Wirkung der Federkraft der wenigstens einen ersten Feder derart betätigt, dass der zweite Ventilkörper von dem zweiten Ventilsitz abgehoben wird und der erste Ventilkörper gegen den ersten Ventilsitz dichtend anschlägt.

Bei dem "Normally Closed"-Drucksteuerventil spannt die wenigstens eine erste Feder den Anker in Richtung auf den ersten Ventilsitz derart vor, dass der am Anker stirnseitig angeordnete erste Ventilkörper gegen den ersten Ventilsitz dichtend gespannt wird und der am Anker an der anderen Stirnseite angeordnete zweite Ventilkörper vom zweiten Ventilsitz abgehoben ist, wobei dann die wenigstens eine Magnetspule unbestromt ist und demzufolge keine Magnetkräfte auf den Anker wirken. Bei einer Bestromung der wenigstens einen Magnetspule wird dann der Anker gegen die Wirkung der Federkraft der wenigstens einen ersten Feder derart betätigt, dass der erste Ventilkörper von dem ersten Ventilsitz abgehoben wird und der zweite Ventilkörper gegen den zweiten Ventilsitz dichtend anschlägt.

Die Erfindung ist daher für beide Ventilbautypen, "Normally Closed" und "Normally Open" anwendbar.

Die Erfindung betrifft auch eine Drucksteuerventileinrichtung für druckluftbetätigte Fahrzeugbremsanlagen, welche insbesondere ausgebildet ist, dass sie einen Bremsdruck bremsschlupfabhängig steuert, und welche wenigstens ein pneumatisch vorsteuerbares Membranventil umfasst. Die Drucksteuerventileinrichtung kann dann wenigstens ein oben beschriebenes elektro-magnetisches Drucksteuerventil umfassen, bei welchem der Druckluft-Versorgungsanschluß an eine den Bremsdruck erzeugende Einrichtung, der Druckluft-Ausgangsanschluß an das wenigstens eine pneumatisch vorsteuerbare Membranventil zur Vorsteuerung des wenigstens einen Membranventils und der Druckluft-Entlüftungsanschluß an eine Entlüftung angeschlossen ist. Der von dem elektro-magnetischen Drucksteuerventil an seinem Druckluft-Ausgangsanschluß ausgesteuerte Druck kann insbesondere auf eine membran des Membranventils wirken, um diese beispielsweise von einem Membranventilsitz abzuheben oder gegen einen Membranventilsitz dichtend zu spannen.

Die Erfindung betrifft auch eine druckluftbetätigte Fahrzeugbremsanlage mit wenigstens einer solchen Drucksteuerventileinrichtung.

Weiterhin betrifft die Erfindung betrifft auch ein Fahrzeug, insbesondere ein Nutzfahrzeug umfassend eine solche druckluftbetätigte Fahrzeugbremsanlage.

### Zeichnung

Ein Ausführungsbeispiel der Erfindung wird in der nachfolgenden Beschreibung mit Bezug zu den Figuren näher erläutert. Es zeigen:
- Fig. 1: einen Längsschnitt durch ein elektro-magentisches Drucksteuerventil gemäß einer bevorzugten Ausführung in einer Belüftungsposition;
- Fig. 2: eine perspektivische Darstellung eines Dichtelements des elektromagentischen Drucksteuerventils von Fig. 1;
- Fig. 3: einen Längsschnitt durch das elektro-magnetische Drucksteuerventil von Fig. 1 in einer Entlüftungsposition.

### Beschreibung des Ausführungsbeispiels

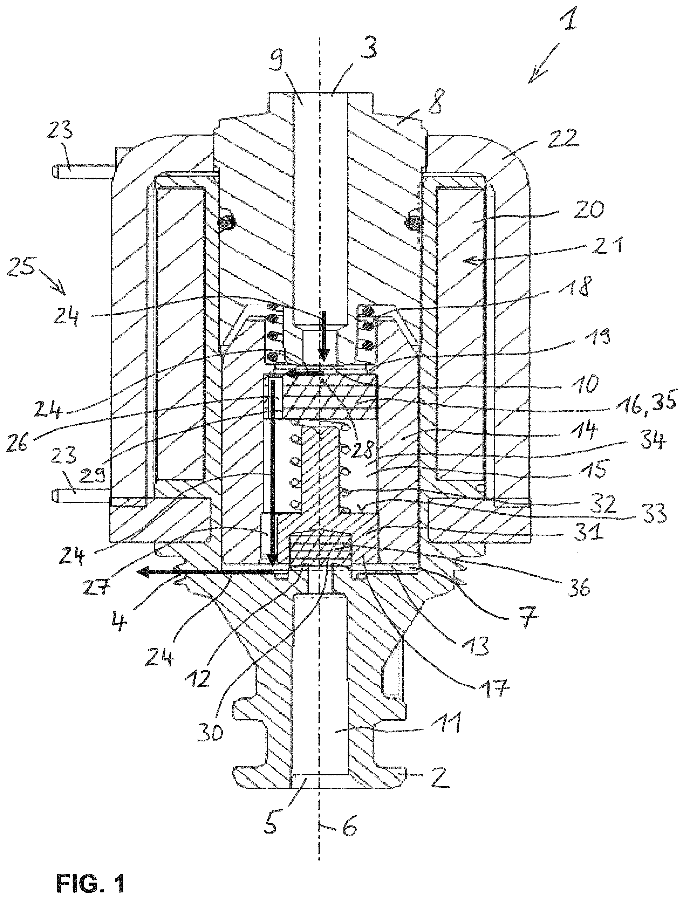

**Fig. 1** zeigt einen Längsschnitt durch ein elektro-magentisches Drucksteuerventil 1 gemäß einer bevorzugten Ausführung in einer Belüftungsposition.

Das Drucksteuerventil 1 umfasst ein Gehäuse 2 mit insgesamt drei Anschlüssen, nämlich einen Druckluft-Versorgungsanschluss 3 zum Anschluss an eine Druckluftversorgung, einen hier direkt nicht sichtbaren Druckluft-Ausgangsanschluss 4 zum Anschluss an einen Verbraucher und einen Druckluft-Entlüftungsanschluss 5 zum Anschluss an eine Entlüftung.

Der Druckluft-Versorgungsanschluss 3 stellt eine Mündung einer sich entlang einer Längsachse 6 des Drucksteuerventils 1 in einem in einer zentralen Sacklochbohrung 7 des Gehäuses 2 aufgenommenen, zylindrischen Einsatz 8 erstreckenden Stufenbohrung 9 dar, welche anderendseitig in einen ersten Ventilsitz 10 mündet, der in dem Einastz 8 ausgebildet ist. Der Druckluft-Ausgangsanschluss 4 befindet sich bezogen auf die Längsschnittdarstellung von **Fig. 1** in einer anderen Ebene des Gehäuses 2 und ist daher dort nicht sichtbar. Der Druckluft-Entlüftungsanschluss 5 stellt eine Mündung einer koaxial mit der Längsachse 6 im Gehäuse 2 verlaufenden weiteren Stufenbohrung 11 dar, welche anderendseitig in einen zweiten Ventilsitz 12 mündet.

Das Gehäuse 2 weist weiterhin im Inneren eine zylindrische Kammer 13 auf, die axial einerseits von einer Stirnfläche eines Ankers 14 begrenzt wird, der in der zentralen Sacklochbohrung 7 des Gehäuses 2 verschieblich geführt ist, und andererseits von einer Bodenfläche der Sacklochbohrung 7 des Gehäuses 2, in welcher auch der zweite Ventilsitz 12 ausgebildet ist. Die Kammer 13 weist eine Strömungsverbindung zum Druckluft-Ausgangsanschluss 4 auf.

Der Anker 14 weist weiterhin eine zentrale axiale Durchgangsbohrung 15 auf, an deren erstem Ende ein erster Ventilkörper 16 und an deren zweitem Ende ein zweiter Ventilkörper 17 angeordnet ist, so dass der erste und zweite Ventilkörper 16, 17 zusammen mit dem Anker 14 innerhalb der Sacklochbohrung 7 des Gehäuses 2 axial verschieblich ist. Der erste Ventilkörper 16 bildet zusammen mit einem ersten Ventilsitz 10 ein Einlassventil und der zweite Ventilkörper 17 zusammen mit dem zweiten Ventilsitz 12 ein Auslassventil.

Der Anker 14 ist durch eine erste Feder 18 hier beispielsweise gegen den zweiten Ventilsitz 12 vorgespannt, die sich einerseits an einer Stirnfläche des Einsatzes 8 und andererseits an einem radial inneren Kragen 19 der zentralen axialen Durchgangsbohrung 15 des Ankers 14 abstützt.

Weiterhin bildet das Gehäuse 2 einen integralen Magnetspulenkörper zur Halterung einer Magnetspule 20 aus, indem es eine radial äußere Ausnehmung 21 aufweist, in welcher die Magnetspule 20 mit einer Mehrzahl von Windungen gewickelt ist. Die radial äußere Ausnehmung 21 wird durch ein separates Magnetspulengehäuse 22 umlaufend abdeckt, welches einen Bestandteil des Gehäuses 2 bildet und Anschlüsse 23 zur Stromversorgung der Magnetspule 20 aufweist, welche mit der Magnetspule 20 verbunden sind.

Der Anker 14 trägt daher an seinen einander abgewandten Stirnseiten je einen Ventilkörper, nämlich den ersten Ventilkörper 16 und den zweiten Ventilkörper 17. Der Anker 14 ist dann in der Sacklochbohrung 7 durch die Federkraft der ersten Feder 18 und von einer Bestromung der Magnetspule 20 herrührende Magnetkräfte derart gleitend verschiebbar, dass er den Druckluft-Ausgangsanschluss 4 wahlweise mit dem Druckluft-Versorgungsanschluss 3 oder dem Druckluft-Entlüftungsanschluss 5 verbindet.

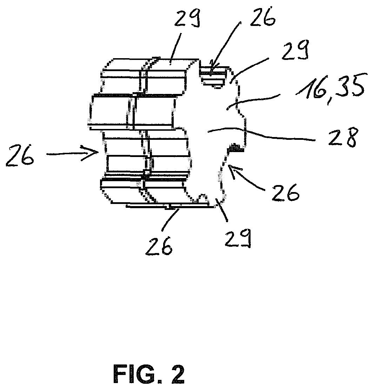

In **Fig. 1** ist die Belüftungsstellung des Ankers 14 gezeigt, in welcher der Druckluft-Ausgangsanschluss 4 mit dem Druckluft-Versorgungsanschluss 3 verbunden ist und in **Fig. 2** die Entlüftungsposition des Ankers 14, in welcher der Druckluft-Ausgangsanschluss 4 mit dem Druckluft-Entlüftungsanschluss 5 verbunden ist, wobei die Druckluftströmung jeweils durch Pfeile 24 illustruiert wird.

Das elektro-magnetische Drucksteuerventil kann
a) als ein "Normally Open"-Drucksteuerventil ausgebildet sein, bei welchem bei unbestromter Magnetspule 20 das Einlassventil geöffnet und das Auslassventil geschlossen ist, oder
b) als ein "Normally Closed"-Drucksteuerventil, bei welchem bei unbestromter Magnetspule 20 das Einlassventil geschlossen und das Auslassventil geöffnet ist.

Bei dem "Normally Open"-Drucksteuerventil 1, wie es hier beschrieben wird, spannt die erste Feder 18 den Anker 14 in Richtung auf den zweiten Ventilsitz 12 derart vor, dass der am Anker 14 an der einen Stirnseite angeordnete zweite Ventilkörper 17 gegen den zweiten Ventilsitz 12 dichtend gespannt wird und der am Anker 14 an der anderen Stirnseite angeordnete erste Ventilkörper 16 vom ersten Ventilsitz 10 abgehoben ist, in einem Zustand, in dem die Magnetspule 20 unbestromt ist und demzufolge keine Magnetkräfte auf den Anker 14 wirken.

Bei einer Bestromung der Magnetspule 20 wird dann der Anker 14 durch Magnetkräfte gegen die Wirkung der Federkraft der ersten Feder 18 derart betätigt, dass der zweite Ventilkörper 17 von dem zweiten Ventilsitz 12 abgehoben wird, aber der erste Ventilkörper 16 gegen den ersten Ventilsitz 10 dichtend anschlägt.

Das Einlassventil ist daher geschlossen, wenn der erste Ventilkörper 16 auf dem ersten Ventilsitz 10 dichtend aufsitzt, und geöffnet, wenn der erste Ventilkörper 16 von dem ersten Ventilsitz 10 abgehoben ist. Bei geöffnetem Einlassventil oder in der Belüftungstellung des Ankers 14 wird eine Strömungsverbindung zwischen dem Druck-Versorgungsanschluss 3 und dem Druck-Ausgangsanschluss 4 hergestellt, wodurch der Druck am Druck-Ausgangsanschluss 4 steigt.

Das Auslassventil ist geschlossen, wenn der zweite Ventilkörper 17 auf dem zweiten Ventilsitz 12 dichtend aufsitzt, und geöffnet, wenn wenn der zweite Ventilkörper 17 von dem zweiten Ventilsitz 12 abgehoben ist. Bei geöffnetem Auslassventil oder in der Entlüftungstellung des Ankers 14 wird eine Strömungsverbindung zwischen dem Druck-Entlüftungsanschluss, der Kammer 13 und dem Druck-Ausgangsanschluss 4 hergestellt, wodurch der Druck am Druck-Ausgangsanschluss 4 sinkt.

Wie oben ausgeführt, ist das elektro-magnetische Drucksteuerventil 1 hier beispielsweise als ein "Normally Open"-Drucksteuerventil ausgebildet, bei welchem bei unbestromter Magnetspule 20 das Einlassventil geöffnet und das Auslassventil geschlossen ist. Bei dem "Normally Open"-Drucksteuerventil spannt daher die erste Feder 18 den Anker 14 in Richtung auf den zweiten Ventilsitz 12 vor, wobei dann bei unbestromter Magnetspule, d.h., wenn keine Magnetkräfte auf den Anker 14 wirken, der zweite Ventilkörper 17 gegen den zweiten Ventilsitz 12 dichtet (Entlüftungsventil geschlossen) und damit eine Entlüftung verhindert, aber der erste Ventilkörper 16 vom ersten Ventilstz abhebt (Einlassventil offen), um eine Belüftung des Druckluft-Ausgangsanschlusses 4 herbeizuführen.

Bei einer Bestromung der Magnetspule 20 wird hingegen der Anker 14 gegen die Wirkung der Federkraft der ersten Feder 18 derart betätigt, dass der zweite Ventilkörper 17 von dem zweiten Ventilsitz 12 abgehoben wird (Auslassventil offen) und der erste Ventilkörper 16 gegen den ersten Ventilsitz 10 dichtend anschlägt (Einlassventil geschlossen).

Alternativ könnte das elektro-magnetische Drucksteuerventil auch als ein "Normally Closed"-Drucksteuerventil ausgebildet sein, bei welchem bei unbestromter Magnetspule 20 das Einlassventil geschlossen und das Auslassventil geöffnet ist. Bei einem "Normally Closed"-Drucksteuerventil spannt die erste Feder 18 den Anker 14 in Richtung auf den ersten Ventilsitz 10 derart vor, dass der erste Ventilkörper 16 gegen den ersten Ventilsitz 10 dichtend gespannt wird (Einlassventil geschlossen) und der zweite Ventilkörper 17 vom zweiten Ventilsitz 12 abgehoben wird (Auslassventil offen), wenn die Magnetspule 20 unbestromt ist und demzufolge keine Magnetkräfte auf den Anker 14 wirken. Bei einer Bestromung der Magnetspule 20 wird dann der Anker 14 gegen die Wirkung der Federkraft der ersten Feder 18 derart betätigt, dass der erste Ventilkörper 16 von dem ersten Ventilsitz 10 abgehoben wird (Einlassventil offen) und der zweite Ventilkörper 17 gegen den zweiten Ventilsitz 12 dichtend anschlägt (Auslassventil geschlossen).

Bei beiden Ventiltypen wird eine permanente axiale Druckluftverbindung 25 durch den ersten Ventilkörper 16, den Anker 14 und den zweiten Ventilkörper 17 hindurch vorgeschlagen, welche die zentrale axiale Durchgangsbohrung 15 des Ankers 14, wenigstens eine erste axiale Durchgangsöffnung 26 in dem ersten Ventilkörper 16 und wenigstens eine zweite axiale Durchgangsöffnung 27 in dem zweiten Ventilkörper 17 umfasst. Dabei weist der erste Ventilkörper 16 einen ersten radial inneren Abschnitt 28 auf, welcher den ersten Ventilsitz 10 dichtend verschließt, wenn das Einlassventil geschlossen ist, und einen ersten radial äußeren Abschnitt 29, welcher die wenigstens eine erste axiale Durchgangsöffnung 26 aufweist. Weiterhin weist der zweite Ventilkörper 17 einen zweiten radial inneren Abschnitt 30 auf, welcher den zweiten Ventilsitz 12 dichtend verschließt, wenn das Auslassventil geschlossen ist, und einen zweiten radial äußeren Abschnitt 31, welcher die wenigstens eine zweite axiale Durchgangsöffnung 27 aufweist.

Der erste radial äußere Abschnitt 29 des ersten Ventilkörpers 16 mit der wenigstens einen ersten axialen Durchgangsöffnung 26 und der zweite radial äußere Abschnitt 31 des zweiten Ventilkörpers 17 mit der wenigstens einen zweiten axialen Durchgangsöffnung 27 sind daher zur axialen Druckluftführung entlang der permanenten axialen Druckluftverbindung 25 vorgesehen, tragen aber vorzugsweise nicht zum Verschließen des ersten Ventilsitzes 10 und des zweiten Ventilsitzes 12 bei. Hingegen ist der erste radial innere Abschnitt 28 des ersten Ventilkörpers 16 zum Verschließen des ersten Ventilsitzes 10 und der zweite radial innere Abschnitt 30 des zweiten Ventilkörpers 17 zum Verschließen des zweiten Ventilsitzes 12 vorgesehen.

Aufgrund dieser Geometrie führt daher die permanente axiale Druckluftverbindung 25 insbesondere nur dann Druckluft von dem Druckluft-Versorgungsanschluss 3 in den Druckluft-Ausgangsanschluss 4, wenn das Einlassventil geöffnet ist. Wenn hingegen das Einlassventil geschlossen ist, dann führt die permanente axiale Druckluftverbindung 25 keine Druckluft, weil zum einen dann der erste radial innere Abschnitt 28 des ersten Ventilkörpers 16 den ersten Ventilsitz 10 verschließt and folglich keine Druckluft vom Druckluft-Versorgungsanschluss 3 in die permanente axiale Druckluftverbindung 25 gelangen kann. Zum andern kann auch wegen des dann verschlossenen Einlassventils der Druckluft-Versorgungsanschluss 3 nicht entlüftet werden.

Der erste Ventilkörper 16 stellt hier beispeilsweise einen ersten separaten Körper dar, der insbesondere am ersten Ende der zentralen axialen Durchgangsbohrung 15 des Ankers 14 axial verschieblich bzw. gleitend aufgenommen ist. Auch stellt der zweite Ventilkörper 17 hier einen zweiten separaten Körper dar, welcher in einem zweiten Ende der axialen Durchgangsbohrung 15 des Ankers 14 insbesondere axial- und drehfest dadurch aufgenommen ist, dass er dort mittels eines Preßssitzes und/oder einer Verstemmung gehalten ist.

Hier ist der erste Ventilkörper 16, der in der zentralen axialen Durchgangsbohrung 15 des Ankers 14 axial verschieblich gelagert ist, an dem zweiten Ventilkörper 17 durch eine zweite Feder 32 axial abgestützt, welche den ersten Ventilkörper 16 mit dessen dem ersten Ventilsitz 10 zugewandten Stirnfläche gegen den radial inneren Kragen 19 des Ankers 14 vorspannt. Die zweite Feder 32 stützt sich einerseits an einer von dem ersten Ventilsitz 10 weg weisenden Stirnfläche des ersten Ventilkörpers 16 und anderseits an einer Stufe 33 des zweiten Ventilkörpers 17 ab, welcher hier im Querschnitt gesehen beispielsweise T-Förmig ausgeführt ist und einen zum ersten Ventilkörper 16 weisenden ersten zylindrischen Abschnitt mit einem Durchmesser aufweist, der kleiner ist als der Durchmesser eines zweiten zylindrischen Abschnitts, welcher die radial innere Umfangsfläche der zentralen axialen Durchgangsbohrung 15 des Ankers 14 kontaktiert. Zwischen dem ersten Abschnitt mit dem kleineren Durchmesser und der radial inneren Umfangsfläche der zentralen axialen Durchgangsbohrung 15 des Ankers 14 ist daher ein radialer Ringspalt 34 vorhanden, in welchem auch die zweite Feder 32 angeordnet ist. Dieser Ringspalt 34 bildet insbesondere einen Abschnitt der permanenten axialen Druckluftverbindung 25 aus.

Insbesondere besteht hier der erste Ventilkörper 16 ausschließlich aus einem ersten zylindrischen Dichtelement 35, welches in seinem ersten radial äußeren Abschnitt 29 insbesondere am Umfang verteilt angeordnete radial äußere Nuten als erste axiale Durchgangsöffungen 26 aufweist, die in axialer Richtung verlaufen und der axialen Druckluftführung dienen, wie in **Fig. 2** gezeigt ist. Die oben angeführte wenigstens eine erste axiale Durchgangsöffnung 26 wird hier daher beispielsweise durch die am Umfang verteilt angeordneten radial äußeren Nuten gebildet.

In analoger Weise weist der zweite radial äußere Abschnitt 31 des zweiten Ventilkörpers 17 insbesondere am Umfang verteilt angeordnete radial äußere Schlitze als zweite axiale Durchgangsöffnungen 27 auf, wie aus **Fig. 1** hervorgeht, die in axialer Richtung verlaufen und der axialen Druckluftführung dienen. Die von den Schlitzen abweichende radial äußere Umfangsfläche des zweiten Ventilkörpers 17 kontaktiert dann die radiale innere Umfangsfläche der zentralen axialen Durchgangsbohrung 15 des Ankers 14 hier beispielsweise in Form eines Preßsitzes.

Bevorzugt trägt hier der zweite Ventilkörper 17 ein zweites flexibles Dichtelement 36 aus einem Elastomer, welches gegen den zweiten Ventilsitz 12 dichtet, wenn das Auslassventil geschlossen ist. Hierzu kann der zweite Ventilkörper 17 insbesondere als ein druckluftdurchlässiger Käfig ausgebildet sein, in welchem dann das zweite Dichtelement 36 gehalten ist, wobei die zum zweiten Ventilsitz 12 weisende Stirnfläche des zweiten Dichtelements 36, welche mit dem zweiten Ventilsitz 12 zusammenwirkt, von dem Käfig freigelassen ist.

Vor diesem Hintergrund ist die Funktionsweise des Drucksteuerventils 1 wie folgt:
Im unbestromten Zustand der Magnetspule wird keine Magnetkraft auf den Anker 14 ausgeübt, wodurch das Drucksteuerventil 1 bzw. Der Anker 14 dann die in Fig. 1 gezeigte Belüftungsstellung einnimmt, in welcher der Anker 14 durch die Federkraft der ersten Feder 18 in Richtung auf den zweiten Ventilsitz 12 vorgespannt wird, in **Fig. 1** nach unten. Dann sitzt der zweite Ventilkörper 17 und genauer dessen zentrales zweites Dichtelement 36 als zweiter radial innerer Abschnitt 30 auf dem zweiten Ventilsitz 12 auf, wodurch das Auslassventil geschlossen ist und dann auch keine Entlüftung stattfinden kann. Weil in dieser Stellung die wenigstens eine zweite axiale Durchgangsöffnung 27 des zweiten Ventilkörpers, hier beispielsweise in Form der radial äußeren Schlitze, radial außerhalb in Bezug auf den zweiten radial inneren Abschnitt 30 des zweiten Ventilkörpers 17 angeordnet ist, ist auch keine Strömungsverbindung zwischen dem Druckluft-Entlüftungsanschluss 5 und dem Druckluft-Ausgangsanschluss 4 möglich.

Andererseits ist dann das Einlassventil geöffnet, weil der erste Ventilkörper 16 vom ersten Ventilsitz 10 abgehoben ist. Folglich kann an dem Druckluft-Versorgungsanschluss 3 anstehende Druckluft, beispielsweise ein Bremsdruck einer druckluftbetätigten Bremsanlage eines Fahrzeugs über die Stufenbohrung 9 zum ersten Ventilsitz 10 und von dort über die permanente axiale Druckluftverbindung 25, nämlich die radial äußeren Nuten des ersten Dichtelements 35, den Ringspalt 34 in der zentralen axialen Durchgangsbohrung 15 des Ankers 14 und die radial äußeren Schlitze des zweiten Ventilkörpers 17 zum Druckluft-Ausgangsanschluss 4 und von dort zu einem Verbraucher gelangen, hier beispielsweise zu einem Membranventil einer Drucksteuereinrichtung zum bremschlupfabhängigen Steuern oder Regeln des Bremsdrucks.

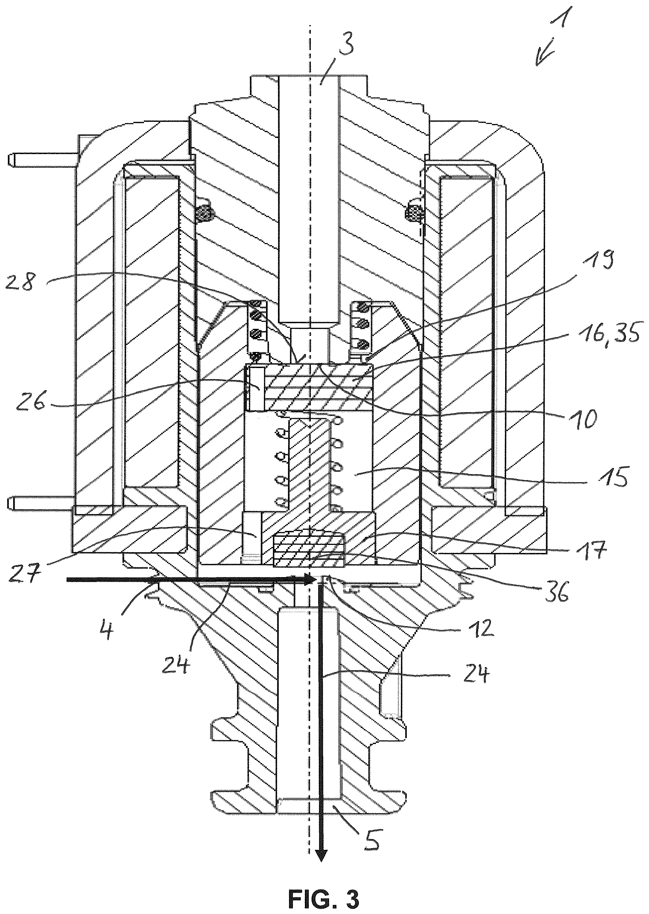

Durch elektrische Erregung der Magnetspule 20 und die dadurch erzeugte magnetische Kraft wird der Anker 14 entgegen der Kraft der ersten Feder 18 entlang der Längsachse 6 derart bewegt, dass das elektro-magnetische Drucksteuerventil 1 bzw. der Anker 14 die in **Fig. 3** dargestellte Entlüftungsstellung einnimmt, in welcher der Druckluft-Ausgangsanschluss 4 mit dem Druckluft-Entlüftungsanschluss 5 verbunden ist. Im Einzelnen ist dann der erste Ventilkörper 16 mit seinem ersten radial inneren Abschnitt 28 gegen den ersten Ventilsitz 10 gedrängt und verschließt diesen, so dass keine Druckluft vom Druckluft-Versorgungsanschluss 3 mehr nachströmen kann. Der erste Ventilkörper 16, der durch die Federkraft der zweiten Feder 32 gegen den radial inneren Kragen 19 gespannt ist, kann dabei von dem radial inneren Kragen 19 abheben und sich in Richtung auf den zweiten Ventilkörper 17 zu bewegen. Damit sorgt die auf den in Richtung der Längsachse 6 axial verschieblich gelagerten ersten Ventilkörper 16 wirkende Federkraft der zweiten Feder 32 in Kombination mit dem elastischen Verhalten des ersten Dichtelements 35 dafür, dass eine axiale Elastizität entsteht, durch welche der Anschlag des ersten Ventilkörpers 16 bzw. des ersten Dichtelements 35 am ersten Ventilsitz 10 stabilisiert wird.

Weil in dieser Stellung die wenigstens eine erste axiale Durchgangsöffnung 26 des ersten Ventilkörpers 16, hier beispielsweise in Form der radial äußeren Nuten, radial außerhalb in Bezug auf den ersten radial inneren Abschnitt 28 des ersten Ventilkörpers 16 angeordnet ist, ist keine Strömungsverbindung zwischen dem Druckluft-Versorgungsanschluss 3 und der zentralen axialen Durchgangsbohrung 15 des Ankers 14 möglich.

Bei dem elektro-magnetischen Drucksteuerventil 1 ist daher der Anker 14 abhängig von einer elektrischen Erregung oder Entregung der Magnetspule 20 zwischen der Belüftungsstellung, in welcher der zweite Ventilkörper 17 gegen den zweiten Ventilsitz 12 dichtet, aber der erste Ventilkörper 16 von dem ersten Ventilssitz 10 abgehoben ist (Einlassventil geöffnet, Auslassventil geschlossen) und einer Entlüftungsstellung, in welcher der erste Ventilkörper 16 gegen den ersten Ventilsitz 10 dichtet, aber der zweite Ventilkörper 17 von dem zweiten Ventilssitz 12 abgehoben ist (Einlassventil geschlossen, Auslassventil geöffnet), axial betätigbar.

Wie bereits oben angedeutet, ist das Drucksteuerventil 1 bevorzugt Bestandteil einer hier ansonsten nicht gezeigten Drucksteuerventileinrichtung für eine druckluftbetätigte Fahrzeugbremsanlage, welche insbesondere ausgebildet ist, dass sie einen Bremsdruck bremsschlupfabhängig steuert, und welche hierzu außer wenigstens einem oben beschriebenen elektro-magnetischen Drucksteuerventil 1 wenigstens ein von dem elektro-magnetischen Drucksteuerventil 1 pneumatisch vorgesteuertes Membranventil umfasst.

Bei dem elektro-magnetischen Drucksteuerventil 1 ist dann der Druckluft-Versorgungsanschluss 3 an eine (Brems-) druckerzeugende Einrichtung, beispielsweise an ein Fußbremsventil, ein Fußbremsmodul oder an ein Druckregelmodul angeschlossen, der Druckluft-Ausgangsanschluss 4 an das pneumatisch vorsteuerbare Membranventil zur Vorsteuerung des Membranventils und der Druckluft-Entlüftungsanschluss 5 an eine Drucksenke. Der von dem elektro-magnetischen Drucksteuerventil 1 an seinem Druckluft-Ausgangsanschluss 4 ausgesteuerte Druck wirkt dann insbesondere auf eine Membran des Membranventils, um diese beispielsweise von einem Membranventilsitz abzuheben oder gegen den Membranventilsitz dichtend zu spannen.

Die Erregung und Entregung der Magnetspule 20 erfolgt dann beispielsweise durch ein elektronisches ABS-Steuergerät, in welchem ABS- oder Bremsschlupfregelroutinen implementiert sind, um beispielsweise durch abwechselndes Stellen des elektro-magnetischen Drucksteuerventils 1 von der Entlüftungsstellung in die Belüftungsstellung und umgekehrt, d.h. durch wiederholtes Anheben und Senken des Drucks, den am Druckluft-Ausgangsanschluss 4 ausgesteuerten Druck bremsschlupfabhängig zu modulieren.

### BEZUGSZEICHENLISTE

- 1: Drucksteuerventil
- 2: Gehäuse
- 3: Druckluft-Versorgungsanschluss
- 4: Druckluft-Ausgangsanschluss
- 5: Druckluft-Entlüftungsanschluss
- 6: Längsachse
- 7: Sacklochbohrung
- 8: Einsatz
- 9: Stufenbohrung
- 10: erster Ventilsitz
- 11: Stufenbohrung
- 12: zweiter Ventilsitz
- 13: Kammer
- 14: Anker
- 15: zentrale Durchgangsbohrung
- 16: erster Ventilkörper
- 17: zweiter Ventilkörper
- 18: erste Feder
- 19: radial innerer Kragen
- 20: Magnetspule
- 21: radial äußere Ausnehmung
- 22: Magnetspulengehäuse
- 23: Anschlüsse
- 24: Pfeile
- 25: Druckluftverbindung
- 26: erste axiale Durchgangsöffnung
- 27: zweite axiale Durchgangsöffnung
- 28: erster radial innerer Abschnitt
- 29: erster radial äußerer Abschnitt
- 30: zweiter radial innerer Abschnitt
- 31: zweiter radial äußerer Abschnitt
- 32: zweite Feder
- 33: Stufe
- 34: Ringspalt
- 35: erstes Dichtelement
- 36: zweites Dichtelement

## Patentansprüche

1. Elektro-magnetisches Drucksteuerventil (1) zur Steuerung eines Luftdrucks, mit
a) einem Gehäuse (2), das einen Druckluft-Versorgungsanschluss (3) zum Anschluss an eine Druckluftversorgung, einen Druckluft-Ausgangsanschluss (4) zum Anschluss an einen Verbraucher und einen Druckluft-Entlüftungsanschluß (5) für eine Entlüftung aufweist, und mit
b) einem Anker (14), welcher an seinen einander abgewandten Stirnseiten je einen Ventilkörper trägt, einen ersten Ventilkörper (16) und einen zweiten Ventilkörper (17), und welcher innerhalb des Gehäuses (2) durch Magnetkräfte entgegen einer Federkraft wenigstens einer ersten Feder (18) derart verschiebbar ist, dass er den Druckluft-Ausgangsanschluss (4) wahlweise mit dem Druckluft-Versorgungsanschluss (3) oder dem Druckluft-Entlüftungsanschluss (5) verbindet, und mit
c) einem ersten Ventilsitz (10), welcher mit dem Druckluft-Versorgungsanschluss (3) verbunden ist, und mit
d) einem zweiten Ventilsitz (12), welcher mit dem Druckluft-Entlüftungsanschluss (5) verbunden ist, wobei
e) der erste Ventilkörper (16) zusammen mit einem ersten Ventilsitz (10) ein Einlassventil und der zweite Ventilkörper (17) zusammen mit dem zweiten Ventilsitz (12) ein Auslassventil bildet, **gekennzeichnet durch**
f) eine permanente axiale Druckluftverbindung (25) durch den ersten Ventilkörper (16), durch das Innere des Ankers (14) und durch den zweiten Ventilkörper (17) hindurch, welche wenigstens eine zentrale axiale Durchgangsbohrung (15) des Ankers (14), wenigstens eine erste axiale Durchgangsöffnung (26) in dem ersten Ventilkörper (16) und wenigstens eine zweite axiale Durchgangsöffnung (27) in dem zweiten Ventilkörper (17) umfasst, wobei
g) der erste Ventilkörper (16) einen ersten radial inneren Abschnitt (28) aufweist, welcher den ersten Ventilsitz (10) dichtend verschließt, wenn das Einlassventil geschlossen ist, und einen ersten radial äußeren Abschnitt (29), welcher die wenigstens eine erste axiale Durchgangsöffnung (26) aufweist, und wobei
h) der zweite Ventilkörper (17) einen zweiten radial inneren Abschnitt (30) aufweist, welcher den zweiten Ventilsitz (12) dichtend verschließt, wenn das Auslassventil geschlossen ist, und einen zweiten radial äußeren Abschnitt (31), welcher die wenigstens eine zweite axiale Durchgangsöffnung (27) aufweist.

2. Elektro-magnetisches Drucksteuerventil nach Anspruch 1, **dadurch gekennzeichnet, dass** die permanente axiale Druckluftverbindung (25) Druckluft von dem Druckluft-Versorgungsanschluss (3) in den Druckluft-Ausgangsanschluss (4) führt, wenn bei geöffnetem Einlassventil der erste Ventilkörper (16) von dem ersten Ventilsitz (10) abgehoben ist und bei geschlossenem Auslassventil der zweite Ventilkörper (17) auf dem zweiten Ventilsitz (12) dichtend aufsitzt.

3. Elektro-magnetisches Drucksteuerventil nach einem der vorhergehenden Ansprüche, **dadurch gekennzeichnet, dass** der erste Ventilkörper (16) einen ersten separaten Körper darstellt, der innerhalb der zentralen axialen Durchgangsbohrung (15) des Ankers (14) aufgenommen ist.

4. Elektro-magnetisches Drucksteuerventil nach einem der vorhergehenden Ansprüche, **dadurch gekennzeichnet, dass** der erste Ventilkörper (16) innerhalb der zentralen axialen Durchgangsbohrung (15) des Ankers (14) axial verschieblich aufgenommen ist.

5. Elektro-magnetisches Drucksteuerventil nach einem der vorhergehenden Ansprüche, **dadurch gekennzeichnet, dass** der zweite Ventilkörper (17) einen zweiten separaten Körper darstellt und in der zentralen axialen Durchgangsbohrung (15) des Ankers (14) axial- und drehfest aufgenommen ist.

6. Elektro-magnetisches Drucksteuerventil nach den Ansprüchen 4 und 5, **dadurch gekennzeichnet, dass** der erste Ventilkörper (16), der in der zentralen axialen Durchgangsbohrung (15) des Ankers (14) axial verschieblich gelagert ist, an dem zweiten Ventilkörper (17) durch wenigstens eine zweite Feder (32) axial abgestützt ist.

7. Elektro-magnetisches Drucksteuerventil nach einem der vorhergehenden Ansprüche, **dadurch gekennzeichnet, dass** der erste Ventilkörper (16) ein erstes flexibles Dichtelement (35) aus wenigstens einem Elastomer ausbildet oder trägt welches gegen den ersten Ventilsitz (10) dichtet, wenn das Einlassventil geschlossen ist.

8. Elektro-magnetisches Drucksteuerventil nach einem der vorhergehenden Ansprüche, **dadurch gekennzeichnet, dass** der zweite Ventilkörper (17) ein zweites flexibles Dichtelement (36) aus wenigstens einem Elastomer ausbildet oder trägt, welches gegen den zweiten Ventilsitz (12) dichtet, wenn das Auslassventil geschlossen ist.

9. Elektro-magnetisches Drucksteuerventil nach einem der vorhergehenden Ansprüche, **dadurch gekennzeichnet, dass** der erste radial äußere Abschnitt (29) des ersten Ventilkörpers (16) und/oder der zweite radial äußere Abschnitt (31) des zweiten Ventilkörpers (17) wenigstens einen radial äußeren Schlitz oder wenigstens eine radial äußere Nut zur axialen Druckluftführung aufweist.

10. Elektro-magnetisches Drucksteuerventil nach einem der vorhergehenden Ansprüche, **dadurch gekennzeichnet, dass** in dem Gehäuse (2) wenigstens eine elektrische Magnetspule (22) aufgenommen ist, wobei der Anker (14) abhängig von einer elektrischen Erregung oder Entregung der wenigstens einen Magnetspule (14) zwischen einer ersten axialen Position, in welcher der zweite Ventilkörper (17) gegen den zweiten Ventilsitz (12) dichtet und der erste Ventilkörper (16) von dem ersten Ventilssitz (10) abgehoben ist und einer zweiten axialen Position, in welcher der erste Ventilkörper (16) gegen den ersten Ventilsitz (10) dichtet und der zweite Ventilkörper (17) von dem zweiten Ventilssitz (12) abgehoben ist, axial betätigbar ist.

11. Elektro-magnetisches Drucksteuerventil nach Anspruch 10, **dadurch gekennzeichnet, dass** es
a) als ein "Normally Open"-Drucksteuerventil ausgebildet ist, bei welchem bei unbestromter Magnetspule (20) das Einlassventil geöffnet und das Auslassventil geschlossen, oder
b) als ein "Normally Closed"-Drucksteuerventil ausgebildet ist, bei welchem bei unbestromter Magnetspule (20) das Einlassventil geschlossen und das Auslassventil geöffnet ist.

12. Drucksteuerventileinrichtung für druckluftbetätigte Fahrzeugbremsanlagen, welche insbesondere ausgebildet ist, dass sie einen Bremsdruck bremsschlupfabhängig steuert, umfassend wenigstens ein pneumatisch vorsteuerbares Membranventil, **dadurch gekennzeichnet, dass** sie wenigstens ein elektro-magnetisches Drucksteuerventil (1) nach wenigstens einem der vorhergehenden Ansprüche umfasst, bei welchem der Druckluft-Versorgungsanschluss (3) an eine den Bremsdruck erzeugende Einrichtung, der Druckluft-Ausgangsanschluss (4) an das wenigstens eine pneumatisch vorsteuerbare Membranventil zur Vorsteuerung des wenigstens einen Membranventils und der Druckluft-Entlüftungsanschluss (5) an eine Drucksenke angeschlossen ist.

13. Druckluftbetätigte Fahrzeugbremsanlage, **dadurch gekennzeichnet, dass** sie wenigstens eine Drucksteuerventileinrichtung nach Anspruch 12 umfasst.

## Claims

1. An electromagnetic pressure control valve (1) for controlling an air pressure, with
a) a housing (2) which has a compressed air supply connector (3) for connection to a compressed air supply, a compressed air outlet connector (4) for connection to a load, and a compressed air ventilating connector (5) for ventilation, and with
b) an armature (14) which, on its end sides which face away from one another, supports in each case one valve body, a first valve body (16) and a second valve body (17), and which can be displaced within the housing (2) by way of magnetic forces counter to a spring force of at least one first spring (18), in such a way that it connects the compressed air outlet connector (4) selectively to the compressed air supply connector (3) or the compressed air ventilating connector (5), and with
c) a first valve seat (10) which is connected to the compressed air supply connector (3), and with
d) a second valve seat (12) which is connected to the compressed air ventilating connector (5), wherein
e) the first valve body (16) forming, together with a first valve seat (10), an inlet valve, and the second valve body (17) forming, together with the second valve seat (12), an outlet valve, **characterized by**
f) a permanent axial compressed air connection (25) through the first valve body (16), through the interior of the armature (14) and through the second valve body (17), which compressed air connection comprises at least one central axial through bore (15) of the armature (14), at least one first axial through opening (26) in the first valve body (16), and at least one second axial through opening (27) in the second valve body (17), wherein
g) the first valve body (16) having a first radially inner portion (28) which closes the first valve seat (10) sealingly when the inlet valve is closed, and a first radially outer portion (29) which has the at least one first axial through opening (26), and wherein
h) the second valve body (17) having a second radially inner portion (30) which closes the second valve seat (12) sealingly when the outlet valve is closed, and a second radially outer portion (31) which has the at least one second axial through opening (27).

2. The electromagnetic pressure control valve as claimed in claim 1, **characterized in that** the permanent axial compressed air connection (25) conducts compressed air from the compressed air supply connector (3) into the compressed air outlet connector (4) when, in the case of an open inlet valve, the first valve body (16) is lifted from the first valve seat (10) and, in the case of a closed outlet valve, the second valve body (17) is seated sealingly on the second valve seat (12).

3. The electromagnetic pressure control valve as claimed in either of the preceding claims, **characterized in that** the first valve body (16) is a first separate body which is received within the central axial through bore (15) of the armature (14).

4. The electromagnetic pressure control valve as claimed in one of the preceding claims, **characterized in that** the first valve body (16) is received axially displaceably within the central axial through bore (15) of the armature (14).

5. The electromagnetic pressure control valve as claimed in one of the preceding claims, **characterized in that** the second valve body (17) is a second separate body and is received in an axially fixed and non-rotational manner in the central axial through bore (15) of the armature (14).

6. The electromagnetic pressure control valve as claimed in claims 4 and 5, **characterized in that** the first valve body (16), which is mounted axially displaceably in the central axial through bore (15) of the armature (14), is supported axially on the second valve body (17) by way of at least one second spring (32).

7. The electromagnetic pressure control valve as claimed in one of the preceding claims, **characterized in that** the first valve body (16) forms or supports a first flexible sealing element (35) which is made from at least one elastomer and seals against the first valve seat (10) when the inlet valve is closed.

8. The electromagnetic pressure control valve as claimed in one of the preceding claims, **characterized in that** the second valve body (17) forms or supports a second flexible sealing element (36) which is made from at least one elastomer and seals against the second valve seat (12) when the outlet valve is closed.

9. The electromagnetic pressure control valve as claimed in one of the preceding claims, **characterized in that** the first radially outer portion (29) of the first valve body (16) and/or the second radially outer portion (31) of the second valve body (17) have/has at least one radially outer slot or at least one radially outer groove for the axial compressed air routing.

10. The electromagnetic pressure control valve as claimed in one of the preceding claims, **characterized in that** at least one electric magnet coil (22) is received in the housing (2), wherein it is possible for the armature (14) to be actuated axially in a manner which is dependent on an electric excitation or de-energization of the at least one magnet coil (14) between a first axial position, in which the second valve body (17) seals against the second valve seat (12) and the first valve body (16) is lifted from the first valve seat (10), and a second axial position, in which the first valve body (16) seals against the first valve seat (10) and the second valve body (17) is lifted from the second valve seat (12).

11. The electromagnetic pressure control valve as claimed in claim 10, **characterized in that** it
a) is configured as a "normally open" pressure control valve, in the case of which, when the magnet coil (20) is not energized, the inlet valve is open and the outlet valve is closed, or
b) is configured as a "normally closed" pressure control valve, in the case of which, when the magnet coil (20) is not energized, the inlet valve is closed and the outlet valve is open.

12. A pressure control valve device for compressed air-actuated vehicle brake systems, which pressure control valve device is configured, in particular, such that it controls a brake pressure in a manner which is dependent on brake slip, comprising at least one pneumatically pilot-controllable diaphragm valve, **characterized in that** it comprises at least one electromagnetic pressure control valve (1) as claimed in at least one of the preceding claims, in the case of which the compressed air supply connector (3) is connected to an apparatus which generates the brake pressure, the compressed air outlet connector (4) is connected to the at least one pneumatically pilot-controllable diaphragm valve for pilot-controlling the at least one diaphragm valve, and the compressed air ventilating connector (5) is connected to a pressure sink.

13. A compressed air-actuated vehicle brake system, **characterized in that** it comprises at least one pressure control valve device as claimed in claim 12.

## Revendications

1. Vanne de commande de pression (1) électromagnétique pour la commande d'une pression d'air avec
a) un boîtier (2) qui présente un raccord d'alimentation en air comprimé (3) pour le raccordement à une alimentation en air comprimé, un raccord de sortie d'air comprimé (4) pour le raccordement à un consommateur et un raccord de ventilation d'air comprimé (5) pour une ventilation, et avec
b) un induit (14) qui porte au niveau de ses côtés avant éloignés l'un de l'autre respectivement un corps de vanne, un premier corps de vanne(16) et un second corps de vanne (17) et qui est mobile à l'intérieur du boîtier (2) par des forces magnétiques à l'encontre d'une force de ressort au moins d'un premier ressort (18) de telle manière qu'il relie le raccord de sortie d'air comprimé (4) au choix au raccord d'alimentation en air comprimé (3) ou au raccord de ventilation d'air comprimé (5), et avec
c) un premier siège de vanne (10) qui est relié au raccord d'alimentation en air comprimé (3), et avec
d) un second siège de vanne (12) qui est relié au raccord de ventilation d'air comprimé (5), dans lequel
e) le premier corps de vanne (16) forme conjointement avec un premier siège de vanne (10) une vanne d'entrée et le second corps de vanne (17) forme conjointement avec le second siège de vanne (12) une vanne de sortie, **caractérisé par**
f) une liaison d'air comprimé (25) axiale permanente par le premier corps de vanne (16), par l'intérieur de l'induit (14) et par le second corps de vanne (17), liaison qui comprend au moins un alésage traversant (15) axial central de l'induit (14), au moins une première ouverture traversante (26) axiale dans le premier corps de traversant (16) et au moins une seconde ouverture traversante (27) axiale dans le second corps de vanne (17), dans lequel
g) le premier corps de vanne (16) présente une première section (28) radialement intérieure qui ferme de manière étanche le premier siège de vanne (10) lorsque la vanne d'entrée est fermée, et une première section (29) radialement extérieure qui présente la au moins une première ouverture traversante axiale, et dans lequel
h) le second corps de vanne (17) présente une seconde section (30) radialement intérieure qui ferme de manière étanche le second siège de vanne (12) lorsque la vanne de sortie est fermée, et une seconde section (31) radialement extérieure qui présente la au moins une seconde ouverture traversante (27) axiale.

2. Vanne de commande de pression électromagnétique selon la revendication 1, **caractérisée en ce que** la liaison d'air comprimé (25) axiale permanente achemine de l'air comprimé du raccord d'alimentation en air comprimé (3) dans le raccord de sortie d'air comprimé (4) lorsqu'en cas de vanne d'entrée ouverte, le premier corps de vanne (16) est soulevé du premier siège de vanne (10) et en cas de vanne de sortie fermée, le second corps de vanne (17) loge de manière étanche sur le second siège de vanne (12).

3. Vanne de commande de pression électromagnétique selon l'une quelconque des revendications précédentes, **caractérisée en ce que** le premier corps de vanne (16) constitue un premier corps séparé qui est reçu à l'intérieur de l'alésage traversant (15) axial central de l'induit (14).

4. Vanne de commande de pression électromagnétique selon l'une quelconque des revendications précédentes, **caractérisée en ce que** le premier corps de vanne (16) est reçu de manière axialement mobile à l'intérieur de l'alésage traversant (15) axial central de l'induit (14).

5. Vanne de commande de pression électromagnétique selon l'une quelconque des revendications précédentes, **caractérisée en ce que** le second corps de vanne (17) constitue un second corps séparé et est reçu de manière fixe axialement et en rotation dans l'alésage traversant (15) axial central de l'induit (14).

6. Vanne de commande de pression électromagnétique selon les revendications 4 et 5, **caractérisée en ce que** le premier corps de vanne (16) qui est logé de manière axialement mobile dans l'alésage traversant (15) axial central de l'induit (14), est en appui axialement contre le second corps de vanne (17) par au moins un second ressort (32).

7. Vanne de commande de pression électromagnétique selon l'une quelconque des revendications précédentes, **caractérisée en ce que** le premier corps de vanne (16) forme ou porte un premier élément étanche (35) flexible en au moins un élastomère qui étanchéifie contre le premier siège de vanne (10) lorsque la vanne d'entrée est fermée.

8. Vanne de commande de pression électromagnétique selon l'une quelconque des revendications précédentes, **caractérisée en ce que** le second corps de vanne (17) forme ou porte un second élément étanche (36) flexible en au moins un élastomère qui étanchéifie contre le second siège de vanne (12) lorsque la vanne de sortie est fermée.

9. Vanne de commande de pression électromagnétique selon l'une quelconque des revendications précédentes, **caractérisée en ce que** la première section (29) radialement extérieure du premier corps de vanne (16) et/ou la seconde section (31) radialement extérieure du second corps de vanne (17) présente au moins une fente radialement extérieure ou au moins une rainure radialement extérieure pour l'acheminement d'air comprimé axial.

10. Vanne de commande de pression électromagnétique selon l'une quelconque des revendications précédentes, **caractérisée en ce qu'**au moins une bobine magnétique (22) électrique est reçue dans le boîtier (2), dans lequel l'induit (14) est actionnable axialement indépendamment d'une excitation ou désexcitation électrique de la au moins une bobine magnétique (14) entre une première position axiale dans laquelle le second corps de vanne (17) étanchéifie contre le second siège de vanne (12), et le premier corps de vanne (16) est soulevé du premier siège de vanne (10) et une seconde position axiale dans laquelle le premier corps de vanne (16) étanchéifie contre le premier siège de vanne (10), et le second corps de vanne (17) est soulevé du second siège de vanne (12).

11. Vanne de commande de pression électromagnétique selon la revendication 10, **caractérisée en ce qu'**elle
a) est formée comme une vanne de commande de pression « normally open » pour laquelle la vanne d'entrée est ouverte et la vanne de sortie est fermée lorsque la bobine magnétique (20) n'est pas alimentée, ou
b) est formée comme une vanne de commande de pression « normally closed » pour laquelle la vanne d'entrée est fermée et la vanne de sortie est ouverte lorsque la bobine magnétique (20) n'est pas alimentée.

12. Dispositif de vanne de commande de pression pour des installations de freinage de véhicule actionnées par air comprimé qui est formé en particulier afin de commander une pression de freinage en fonction du patinage au freinage, comprenant au moins une vanne de membrane prépilotable pneumatiquement, **caractérisé en ce qu'**il comprend au moins une vanne de commande de pression électromagnétique (1) selon au moins l'une quelconque des revendications précédentes, pour laquelle le raccord d'alimentation en air comprimé (3) est raccordé à un dispositif générant la pression de freinage, le raccord de sortie d'air comprimé (4) à la au moins une vanne de membrane prépilotable pneumatiquement pour la prépilotage de la au moins une vanne de membrane et le raccord de ventilation d'air comprimé (5) à un puits de pression.

13. Installation de freinage de véhicule actionné par air comprimé, **caractérisée en ce qu'**elle comprend au moins un dispositif de vanne de commande de pression selon la revendication 12.
